# EUROPÄISCHE PATENTSCHRIFT

(11) **EP 4 237 286 B1**
(45) Veröffentlichungstag und Bekanntmachung des Hinweises auf die Patenterteilung: **15.10.2025**
(21) Anmeldenummer: 22707620.5
(22) Anmeldetag: 31.01.2022
(51) Int. Cl.: B60R 7/02, B60R 7/10

(54) **GARDEROBE FÜR EINEN STAURAUM EINES PERSONENKRAFTWAGENS**
WARDROBE FOR A STOWAGE SPACE OF A PASSENGER VEHICLE
GARDE-ROBE POUR UN ESPACE DE RANGEMENT D'UN VÉHICULE DE TRANSPORT DE PASSAGERS

(30) Priorität: 09.02.2021 DE 102021000661
(43) Veröffentlichungstag der Anmeldung: 06.09.2023
(73) Patentinhaber: Mercedes-Benz Group AG, 70372 Stuttgart (DE)
(72) Erfinder: KALINEAK, Kevin, 71034 Böblingen (DE)
(74) Vertreter: Novagraaf Group
(86) Internationale Anmeldenummer: PCT/EP2022/052157
(87) Internationale Veröffentlichungsnummer: WO 2022/171466

(56) Entgegenhaltungen:
- US-A- 2 577 263
- US-A- 3 318 471
- US-A1- 2012 085 799

## Beschreibung

Die Erfindung betrifft einen Personenkraftwagen mit einem Stauraum und einer Garderobe für den Stauraum, gemäß dem Oberbegriff des Anspruchs 1.

Die Ablage von Kleidungsstücken im Stauraum beziehungsweise Kofferraum eines Personenkraftwagens bereitet häufig Probleme, da sich beispielsweise andere Gegenstände, Schmutz, Wasser oder dergleichen im Stauraum beziehungsweise am Boden des Stauraums befinden. Dies führt nicht selten zur Verschmutzung oder zum Zerknittern der Kleidungsstücke. Zudem kann die Kapazität des gesamten Stauraums bei der Lagerung von Kleidungsstücken nicht unter allen Umständen genutzt werden.

Aus der EP 2 574 505 A1 ist eine Ablagebox für einen Laderaum von Fahrzeugen bekannt, bei der ein Abdeckrollo zum Abdecken des Laderaums in eine Position bringbar ist, in welcher dieser oberseitig eine muldenartige Aufnahme ausbildet, in welcher Kleidungsstücke abgelegt werden können. Eine derartige Anordnung ermöglicht jedoch das Unterbringen jeweiliger Kleidungsstücke lediglich oberhalb des Stauraums und somit quasi auch außerhalb des Stauraums. Zudem ist eine derartige Einrichtung nicht für Limousinen mit Stufenheck geeignet.

Aus der US 2 577 263 A geht ein Personenkraftwagen mit einer zwischen einer Öffnungsstellung und einer Schließstellung schwenkbaren Klappe hervor, welche auf ihrer Innenseite mit einem Aufhängungsmittel versehen ist, an welchem Kleidungsstücke aufhängbar sind. Des Weiteren ist an der Klappe ein flächiges Abdeckelement vorgesehen, welches mittels eines Reißverschluss an einem an der Klappeninnseite vorgesehen elastischen Bands befestigbar ist, so dass das Kleidungsstück zwischen dem Abdeckelement und der Klappeninnenseite geschützt angeordnet ist. Um bei geöffnetem Reißverschluss das Herunterklappen des Abdeckelements zu begrenzen, ist ein Band vorgesehen, welches einenends an der Klappe und anderenends am Abdeckelement befestigt ist. Es hat sich gezeigt, dass zur Unterbringung der Kleidungsstücke in der Garderobe einige Handgriffe erforderlich sind, was wenig komfortabel ist. Ferner ist das Öffnen und Schließen des Reißverschlusses nur mit entsprechend Geschick möglich und bedarf beider Hände des Bedieners.

Aus der gattungsbildenden US 2012/0 085 799 A1 geht ein Personenkraftwagen mit einer zwischen einer Öffnungsstellung und einer Schließstellung schwenkbaren Klappe hervor, welche auf ihrer Innenseite mit einem Aufhängungsmittel versehen ist, an welchem Kleidungsstücke aufhängbar sind. Zur Fixierung der Kleidungsstücke an der Klappe in einem Abstand vom Aufhängungsmittel, damit die Kleidungsstücke bei geschlossener Klappe nicht beziehungsweise nicht so sehr in einen Stauraum durchhängen, ist ein flexibles Band vorgesehen, das an einem Ende mit einem Haken versehen ist. Nach dem Aufhängen der Kleidungsstücke wird das Band über diese gespannt und an seinem freien Ende mittels des Hakens an einem entsprechenden Gegenelement an der Klappe fixiert, so dass die zwischen dem Band und der Klappe befindlichen Kleidungstücke gehalten sind. Mittels Schienenführungen ist die relative Lage des Bandes gegenüber dem Aufhängungsmittel veränderbar. Auch bei dieser Garderobe ist das Handling nur wenig komfortabel und bedarf in der Regel einer Zweihandbedienung.

Aufgabe der vorliegenden Erfindung ist es daher, einen Personenkraftwagen mit einer Garderobe für einen Stauraum zu schaffen, mittels welcher jeweilige Kleidungsstücke besonders einfach und komfortabel innerhalb des Stauraums untergebracht werden können.

Diese Aufgabe wird erfindungsgemäß durch einen Personenkraftwagen mit den Merkmalen des Anspruchs 1 gelöst. Vorteilhafte Ausgestaltungen mit günstigen Weiterbildungen der Erfindung sind in den abhängigen Ansprüchen angegeben.

Der Personenkraftwagen umfasst einen Stauraum mit einer Garderobe und eine den Stauraum zugänglich machende beziehungsweise verschließende Stauraumklappe, an deren Innenseite ein Aufhängungsmittel angeordnet ist, an welchem bei geöffneter Stauraumklappe wenigstens ein Kleidungsstück in einer hängenden Position aufhängbar ist. Des Weiteren ist eine, wenigstens ein, an zumindest einem Ende an der Innenseite der Stauraumklappe befestigtes, biegeweiches Ablageelement aufweisende Ablageeinrichtung vorgesehen, mittels welcher das wenigstens eine Kleidungsstück in einer Ablageposition anordenbar ist. Erfindungsgemäß ist vorgesehen, dass mittels der Ablageeinrichtung das wenigstens eine Kleidungsstück beim Schließen der Stauraumklappe aus der hängenden Position in eine Ablageposition unterseitig der Innenseite der Stauraumklappe und/oder einer Oberseite des Stauraums verlagerbar ist, und dass hierzu das wenigstens ein biegeweiches Ablageelement mit seinem anderen Ende an eine Einzugseinrichtung gekoppelt ist, mittels welcher das Ablageelement einziehbar und so in seiner Relativlänge zur Stauraumklappe verkürzbar ist.

Erfindungsgemäß ist es demzufolge vorgesehen, dass jeweilige Kleidungsstücke zunächst bei geöffneter Stauraumklappe am entsprechenden Aufhängungsmittel in einer hängenden Position angeordnet werden können, wonach diese beim Schließen der Stauraumklappe mittels der Ablageeinrichtung aus der hängenden Position in die Ablageposition verlagerbar ist, in welcher das Kleidungsstück in einer beispielsweise etwa horizontalen Lage im Nahbereich unterseitig der Innenseite der Stauraumklappe und/oder einer Oberseite des Stauraums angeordnet ist. Demzufolge wird das wenigstens eine Kleidungsstück beim Schließen der Stauraumklappe besonders günstig in einen oberen Bereich des Stauraums verbracht, in welchem sich keine Gegenstände befinden beziehungsweise kein Schmutzwasser oder dergleichen sich sammeln. Im Ergebnis wird hierdurch eine besonders günstige und schonende Unterbringung der jeweiligen Kleidungsstücke erreicht, ohne dass diese insbesondere verschmutzt oder zerknittert werden. Dadurch, dass das wenigstens eine biegeweiche Ablageelement mittels der Einzugseinrichtung in seiner Relativlänge zur Stauraumklappe veränderbar ist, kann die Verlagerung des wenigstens einen Kleidungsstücks aus der hängenden Position in die Ablageposition und umgekehrt während des Schließens beziehungsweise Öffnens der Stauraumklappe erreicht werden. Unter biegeweich ist hierbei zu verstehen, dass das jeweilige Ablageelement reversibel biegbar und aufrollbar ist, ohne dass es infolge des Biegens oder Aufrollens oder dergleichen zu einer plastischen Verformung kommt. Hierbei sind insbesondere Textilien, beispielsweise Textilbänder oder Textilbahnen denkbar, oder aber Leisten, Bahnen oder dergleichen aus einem Kunststoff, einer stärkeren Kunststofffolie oder dergleichen.

Als biegeweiche Ablageelemente können dabei in weiterer Ausgestaltung der Erfindung jeweilige Ablagebänder oder dergleichen vorgesehen sein, welche mit ihrem einen Ende an der Innenseite der Stauraumklappe und mit ihrem anderen Ende mittels einer jeweiligen Einzugseinrichtung in ihrer Relativlänge zur Stauraumklappe veränderbar sind. Beispielsweise können zwei parallel zueinander verlaufende Ablagebänder vorgesehen sein, mittels welchen jeweilige Kleidungsstücke beim Schließen beziehungsweise Öffnen der Stauraumklappe zwischen der hängenden Position und der Ablageposition verlagerbar sind. Derartige Ablagebänder sind besonders platzsparend im Stauraum unterbringbar und überdies mittels jeweiliger Einzugseinrichtungen besonders günstig einziehbar beziehungsweise freigebbar.

Eine weitere vorteilhafte Ausführungsform sieht vor, dass auf der dem wenigstens einen biegeweichen Ablageelement gegenüberliegenden Seite des wenigstens einen Kleidungsstücks wenigstens ein weiteres biegeweiches Ablageelement oder jeweilige Ablagebänder vorgesehen ist/sind, welche/welches mit seinem/ihrem einen Ende an der Innenseite der Stauraumklappe und mit seinem/ihrem anderen Ende mittels einer jeweiligen Einzugseinrichtung in seiner/ihrer Relativlänge zur Stauraumklappe veränderbar ist/sind, wobei das Kleidungsstück in seiner Ablageposition zwischen den beidseitigen biegeweichen Ablageelementen beziehungsweise Ablagebändern angeordnet ist. Durch beidseitig angeordnete Ablageelemente beziehungsweise Ablagebänder kann somit eine besonders zuverlässige Verlagerung der Kleidungsstücke zwischen der hängenden Position und der Ablageposition erfolgen.

Weiterhin hat es sich als vorteilhaft gezeigt, wenn sich zwischen den Ablagebändern jeweilige Ablagequerelemente erstrecken. Beispielsweise können diese Ablagequerelemente sich zwischen zumindest im Wesentlichen parallel zueinander verlaufenden Ablagebändern erstrecken. Durch die Ablagequerelemente ist dabei eine besonders zuverlässige Ablage der Kleidungsstücke insbesondere in ihrer Ablageposition möglich. Auch die Ablagequerelemente können beispielsweise als biegeweiche Bänder, Leisten oder dergleichen aus einem Textil oder einem Kunststoff gebildet sein. Hierdurch ergibt sich eine insgesamt äußerst platzsparende und leicht verstaubare Anordnung der Ablagebänder beziehungsweise Ablagequerelemente. Auch steife Elemente, beispielsweise aus Holz, Kunststoff oder Metall wären jedoch denkbar.

Eine weitere vorteilhafte Ausführungsform der Erfindung sieht vor, dass die Ablageeinrichtung wenigstens ein Umlenkelement für das zugeordnete biegeweiche Ablageelement oder jeweilige Ablagebänder aufweist. Somit kann das jeweilige Kleidungsstück besonders zuverlässig zwischen der hängenden Position und der Ablageposition verlagert werden.

In diesem Zusammenhang hat es sich als weiter vorteilhaft gezeigt, wenn an dem Umlenkelement wenigstens ein Lenkerelement vorgesehen ist, mittels welchem die biegeweichen Ablageelemente oder Ablagebänder in der Ablageposition voneinander beabstandet gehalten sind.

Weitere Vorteile und Einzelheiten der Erfindung ergeben sich aus der nachfolgenden Beschreibung bevorzugter Ausführungsbeispiele sowie anhand der Zeichnung.

Dabei zeigen:

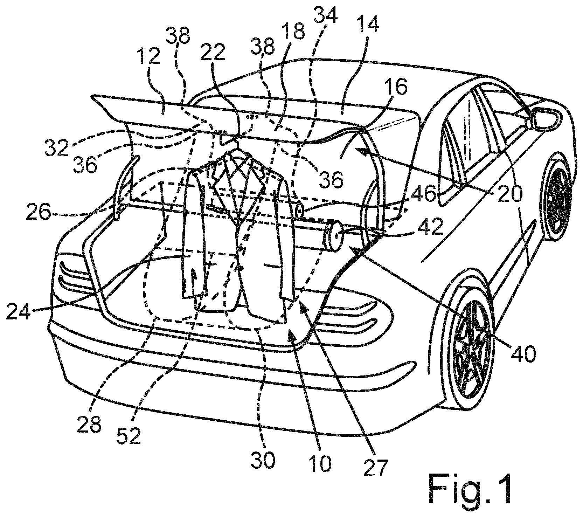

- Fig. 1: eine schematische und perspektivische Rückansicht auf einen Personenkraftwagen mit Stufenheck mit einem Stauraum, welcher durch eine hier in ihrer Offenstellung gezeigten Stauraumklappe verschließbar ist, an deren Innenseite ein Aufhängungsmittel einer Garderobe angeordnet ist, an welcher Kleidungsstücke bei geöffneter Kofferraumklappe in einer hängenden Position aufhängbar sind;

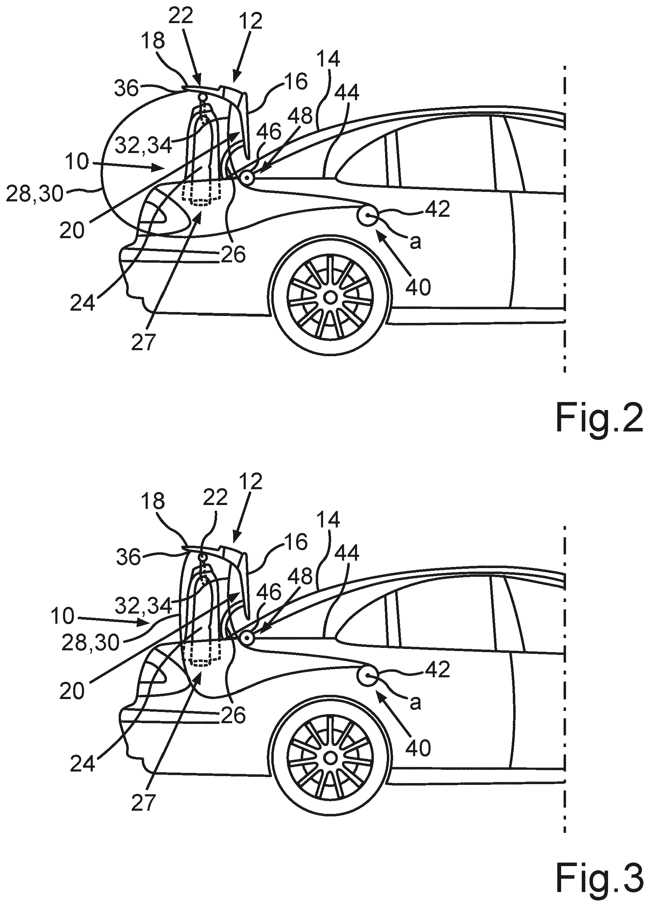

- Fig. 2: eine schematische Seitenansicht auf den Personenkraftwagen im Bereich des Stauraums mit der Garderobe, dessen Aufhängungsmittel gemäß Figur 1 jeweilige Kleidungsstücke in hängender Position angeordnet sind;
- Fig. 3: eine schematische Seitenansicht auf den Personenkraftwagen gemäß Figur 2, wobei innerhalb des Stauraums eine Ablageeinrichtung erkennbar mit jeweiligen Ablagebändern, welche mittels einer Einzugseinrichtung in ihrer Länge verkürzt sind;

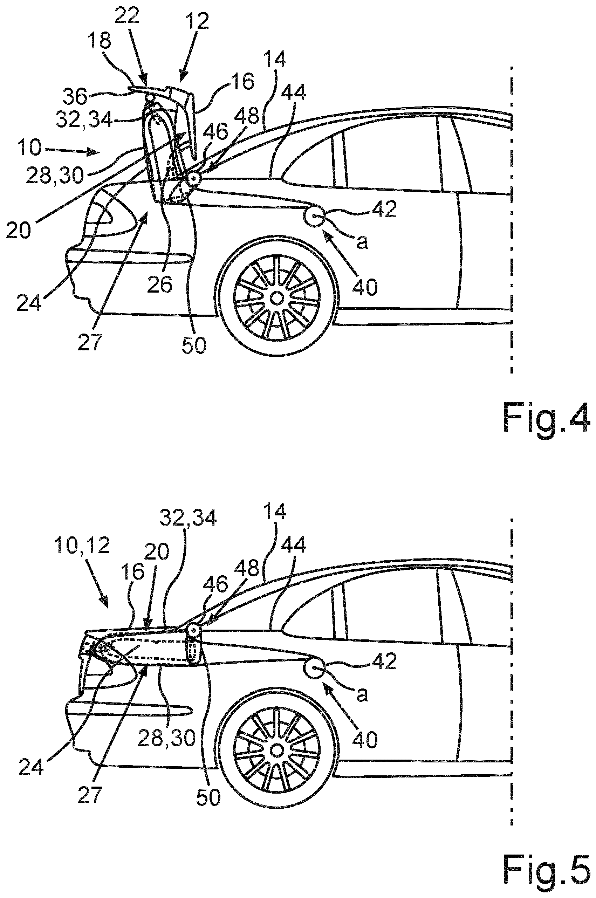

- Fig. 4: eine weitere Seitenansicht des Personenkraftwagens analog zu den Figuren 2 und 3, wobei vorliegend beim Schließen der Stauraumklappe die Kleidungsstücke mittels der Ablageeinrichtung aus der hängenden Position in eine Ablageposition zumindest im Wesentlichen unterseitig der Innenseite der Stauraumklappe und/oder einer Oberseite des Stauraums verlagerbar sind;
- Fig. 5: eine weitere Seitenansicht auf den Personenkraftwagen analog den Figuren 2 bis 4, wobei vorliegend die Stauraumklappe in ihrer geschlossenen Stellung angeordnet ist, in welcher die Kleidungsstücke in ihrer Ablageposition zumindest im Wesentlichen unterseitig der Innenseite der Stauraumklappe und/oder der Oberseite des Stauraums untergebracht sind; und in

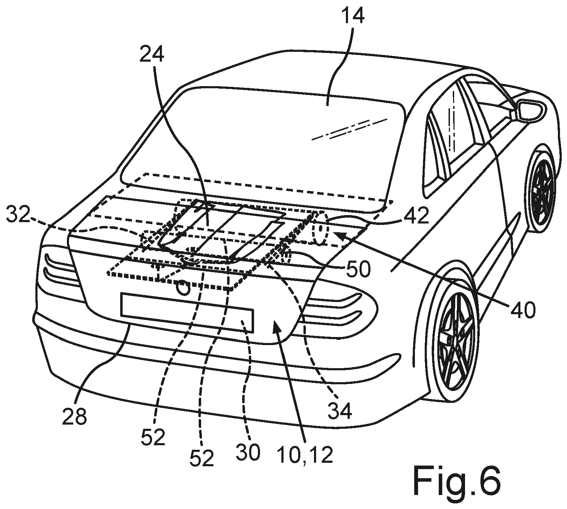

- Fig. 6: eine schematische und perspektivische Rückansicht auf den Personenkraftwagen analog zu Figur 1, wobei vorliegend die Stauraumklappe analog zu Figur 5 in ihrer Schließstellung dargestellt ist, in welcher die Kleidungsstücke mittels der Ablageeinrichtung in ihre Ablageposition zumindest im Wesentlichen unterseitig der Innenseite der Stauraumklappe und/oder der Oberseite des Stauraums angeordnet sind.

In Fig. 1 ist in einer schematischen und perspektivischen Rückansicht ein Personenkraftwagen mit Stufenheck dargestellt. Dieser Personenkraftwagen umfasst heckseitig einen Stauraum 10, welcher durch eine hier zu einer Garderobe gehörenden, in ihrer Offenstellung gezeigte Stauraumklappe beziehungsweise Heckklappe 12 verschließbar ist.

In Zusammenschau mit Fig. 2, welche die Limousine in einer schematischen Seitenansicht analog zu Fig. 1 bei geöffneter Stauraumklappe 12 zeigt, wird erkennbar, dass die Stauraumklappe 12 einen sich in geschlossener Position an eine Heckscheibe 14 anschließenden, etwa horizontal überlaufenden Bereich 16 und einen hierzu abgewinkelten, eben mit einer Heckwand verlaufenden Bereich 18 umfasst. An einer Innenseite 20 der Stauraumklappe 12 im Bereich 18 ist von einer Garderobe ein Aufhängungsmittel 22, beispielsweise in Form einer Öse, eines Bügels, eines Hakens oder dergleichen vorgesehen, an welchem wenigstens ein Kleidungsstück 24 bei geöffneter Stauraumklappe 12 in einer hängenden Position aufhängbar beziehungsweise anordenbar ist. Dies kann beispielsweise unter Zuhilfenahme von Kleiderbügeln oder dergleichen erfolgen. Wie aus den Fig. 1 und 2 erkennbar ist, hängen dabei die jeweiligen Kleidungsstücke 24 mit ihrem unteren Ende bis in den Bereich des geöffneten Stauraums 10 hinein.

Die Stauraumklappe 12 ist im vorliegenden Fall über jeweilige Bügel 26 karosserieseitig schwenkbar gelagert, um die Schwenkbewegung zwischen ihrer hier gezeigten Offenstellung und ihrer Schließstellung zu bewerkstelligen.

Neben der Stauraumklappe 12 mit dem Aufhängungsmittel 22 umfasst die Garderobe eine Ablageeinrichtung 28, welche im vorliegenden Fall zum einen zwei biegeweiche Ablageelemente in Form jeweiliger Ablagebänder 28, 30 aufweist, welche - wie dies in den Fig. 2 und 3 erkennbar ist - sich in Fahrzeuglängsrichtung hinter den jeweiligen Kleidungsstücken 24 erstrecken.

Im vorliegenden Fall sind zwischen den jeweiligen hinteren Ablagebändern 28, 30 jeweilige Ablagequerelemente 52 vorgesehen, welche beispielsweise ebenfalls als biegeweiche Bänder ausgebildet sind. Insgesamt bilden die Ablagebänder 28, 30 und die Ablagequerelemente 52 ein aus Textilbändern, Kunststoffbändern oder dergleichen gebildetes Ablageelement nach Art einer Strickleiter oder dergleichen.

In vorliegenden Fall sind die Ablagebänder 30 beziehungsweise 32 und 34 weiter voneinander entfernt beabstandet beziehungsweise auseinander angeordnet als üblicherweise Kleidungsstücke 24 breit sind. Die Kleidungsstücke werden nämlich im vorliegenden Fall durch die Ablagequerelemente 52 gehalten. Gleichwohl ist es - wie bereits erläutert - auch denkbar, dass die jeweiligen Ablagebänder 28 und 30 beziehungsweise 32 und 34 in einem geringeren jeweiligen Abstand angeordnet sind, sodass die Kleidungsstücke 24 durch die Ablagebänder 28, 30 beziehungsweise 32, 34 unmittelbar gehalten sind.

Neben den beiden in Fahrzeuglängsrichtung hinter den Kleidungsstücken 24 verlaufenden Ablagebändern 28, 30 sowie den Ablagequerelementen 52 umfasst die Ablageeinrichtung 20 zwei weitere biegeweiche Ablageelemente in Form jeweiliger Ablagebänder 32, 34, welche - wie dies ebenfalls beispielsweise aus den Fig. 2 und 3 erkennbar ist - in Fahrzeuglängsrichtung vor den Kleidungsstücken 24 verlaufen. Auch diese beiden vorderen Ablagebänder 32, 34 sind beispielsweise über Ablagequerelement 52 miteinander verbunden, wie dies bereits im Zusammenhang mit den hinteren Ablagebändern 28, 30 erläutert worden ist. Auch hinsichtlich der Materialien und Ausgestaltungen wird auf die Erläuterungen zu den hinteren Ablagebändern 28, 30 verwiesen.

Insgesamt verlaufen somit die Ablagebänder 28, 30 und 32, 34 jeweils außenseitig beziehungsweise randseitig der Kleidungsstücke 24, wobei diese insbesondere unmittelbar mit dem vorderen beziehungsweise hinteren Ablagequerelementen 52 in Kontakt kommen.

Alternativ können sowohl die beiden hinteren Ablagebänder 28, 30 und/oder die beiden vorderen Ablagebänder 32, 34 bezogen auf die Fahrzeugquerrichtung derart voneinander beabstandet sein, dass diese beim im Weiteren noch näher erläuterten Einziehen unmittelbar mit den Kleidungsstücken in Kontakt kommen können, und nicht nur die Ablagequerelemente 52. In diesem Fall beträgt der Abstand zwischen den beiden die beiden hinteren Ablagebänder 28, 30 und/oder den beiden vorderen Ablagebänder 32, 34 beispielsweise etwa zwischen 20 und 50 Zentimeter. Ebenfalls wäre es denkbar, dass anstelle mehrerer Ablagebänder 28, 30 lediglich ein biegeweiches Ablageelement, beispielsweise in Form einer Stoffbahn, vorgesehen wird.

Die jeweiligen hinteren Ablagebänder 28, 30 beziehungsweise vorderen Ablagebänder 32, 34 sind dabei jeweils mit ihrem einen Ende 36 beziehungsweise 38 an der Innenseite 20 der Stauraumklappe 12 befestigt. Beispielsweise sind die hinteren Ablagebänder 28, 30 mit ihren jeweiligen Enden 36 bei geöffneter Stauraumklappe 12 im Bereich 18 hinter dem Aufhängungsmittel 22 befestigt, wohingegen die vorderen Ablagebänder 32, 34 mit ihrem jeweiligen Ende 38 im Bereich 18 der Stauraumklappe 12 vorderseitig der Kleidungsstücke 24 befestigt sind.

Weiterhin umfasst die Ablageeinrichtung 27 eine Einzugseinrichtung 40 mit einer oder mehrerer Einzugsrollen 42, welche um eine Achse a drehbar ist, welche sich zumindest im Wesentlichen in Fahrzeugquerrichtung und horizontal im Bereich einer Oberseite 44 des Stauraums 10 und vorderseitig in der Stauraumklappe 12 erstreckt. Auf die eine oder die mehreren Einzugsrollen 42 sind die jeweiligen Ablagebänder 28, 30 beziehungsweise 32 und 34 mit ihren jeweiligen Enden 36 beziehungsweise 38 abgewandten Enden aufgerollt.

Zudem umfasst die Einzugseinrichtung 40 eine Umlenkrolle 46 beziehungsweise gegebenenfalls mehrere Umlenkrollen 46 um welche insbesondere die vorderen Ablagebänder 32, 34 um einen Eckbereich 48 an der Oberseite 44 des Stauraums 12, welcher an eine Vorderkante der Stauraumklappe 12 angrenzt, umlenkbar sind.

Wie nun zunächst aus einer Zusammenschau der Fig. 1 und 2 erkennbar ist, sind die biegeweichen Ablagebänder 28, 30 rückwärtig der Kleidungsstücke 24 beziehungsweise die Ablagebänder 32, 34 vorderseitig der Kleidungsstücke 24 bei geöffneter Stauraumklappe 12 mit entsprechender Lose abgewickelt, sodass jeweilige Kleidungsstücke 24 auf bequeme Art und Weise am Aufhängungsmittel 22 aufgehängt beziehungsweise auch abgenommen werden können.

In einer Zusammenschau von Fig. 2 mit Fig. 3 ist erkennbar, dass in einer frühen Phase einer Schließbewegung der Stauraumklappe 12 die jeweiligen Ablagebänder 28, 30, 32, 34 und die Ablagequerelemente 52 mittels der Einzugseinrichtung 40 um die Einzugsrolle 42 eingezogen werden. Dies kann beispielsweise in Abhängigkeit einer startenden Schließbewegung der Stauraumklappe 12 erfolgen. Auch andere Mechanismen sind hier denkbar, beispielsweise auch federbelastete Auszugsmechanismen. Wie aus Fig. 3 erkennbar ist, kommen durch das Einziehen der jeweiligen Ablagebänder 28 bis 34 insbesondere die hinteren Ablagebänder 28, 30 und/oder deren Ablagequerelemente 52 in Kontakt mit den Kleidungsstücken 24 beziehungsweise dem hintersten Kleidungsstück 24.

Im weiteren Verlauf der Schließbewegung der Stauraumklappe 12, welche aus den Fig. 4 und 5 in analogen Seitenansichten zu den Fig. 2 und 3 erkennbar ist, erfolgt beim Schließen der Stauraumklappe 12 ein weiteres Einziehen sowohl der hinteren Ablagebänder 28, 30 als auch der vorderen Ablagebänder 34, 36. Insbesondere die hinteren Ablagebänder 28, 30 und deren und die zugehörigen Ablagequerelemente 52 sorgen hierbei dafür, dass die Kleidungsstücke 24 aus der hängenden Position bei geöffneter Stauraumklappe gemäß den Fig. 1 bis 3 in eine schräge Zwischenposition (Fig. 4) beziehungsweise in eine Ablageposition bewegt beziehungsweise verlagert werden, welche diese bei zumindest annähernd geschlossener Stauraumklappe 12 gemäß Fig. 5 einnimmt. In dieser Ablageposition befinden sich die Kleidungsstücke 24 im Wesentlichen unterseitig der Innenseite der Stauraumklappe 12, genauer gesagt unterhalb der Innenseite 20 des Bereichs 16 der Stauraumklappe 12, sowie bei längeren Kleidungsstücken 24 unterhalb der Oberseite 44 des Stauraums 10. Dabei ruhen die Kleidungsstücke von oben her auf den hinteren und nunmehr unteren Ablagebändern 28, 30. Dabei ruhen die Kleidungsstücke von oben her auf den hinteren, nunmehr unteren Ablagebänder 28, 30 und/oder deren zugehörigen Ablagequerelementen 52.

Die wesentliche Funktion der vorderen beziehungsweise in der Ablageposition oberen Ablagebänder 32, 34 und deren Ablagequerelementen 52 ist es, die Kleidungsstücke 24 um den Eckbereich 48 am hinteren Ende der Oberseite 44 des Stauraums 10, welche an die Vorderkante der Stauraumklappe 12 angrenzt, umzulenken und somit zu gewährleisten, dass die Kleidungsstücke 24 mit ihren jeweiligen unteren Enden kollisionsfrei und ordnungsgemäß unterseitig der Oberseite 44 des Stauraums 10 verbracht werden. Außerdem dienen die vorderen und in der Ablageposition oberen Ablagebänder 32, 34 auch dazu, die Kleidungsstücke 24 zwischen diesen und den hinteren beziehungsweise in der Ablageposition unteren Ablagebändern 28, 30 einzuklemmen.

Eine Zusammenschau der Fig. 4 und 5 zeigt außerdem, dass an der Umlenkrolle 46 wenigstens ein oder mehrere Lenkerelemente 50 vorgesehen sind, mittels welchen die biegeweichen Ablagebänder 28, 30 relativ zu den Ablagebändern 32, 34 in der Ablageposition voneinander beabstandet gehalten sind. Im Bereich der anderen Enden 36, 38 sind die Ablagebänder 28, 30 beziehungsweise 32, 34 durch ihre entsprechenden Befestigungsstellen voneinander beabstandet.

In Fig. 6 ist in einer schematischen und perspektivischen Rückansicht analog zu Fig. 1 nochmals die Limousine bei geschlossener Stauraumklappe 12 erkennbar. Im vorliegenden Fall sind zwischen den jeweiligen hinteren und unteren Ablagebändern 28, 30 und/oder zwischen den vorderen beziehungsweise oberen Ablagebändern 32, 34 die jeweiligen Ablagequerelemente 52 erkennbar. Es ist nochmal erkennbar, dass die jeweiligen Ablagebänder 28, 30 beziehungsweise 32 und 34 weiter voneinander entfernt beabstandet beziehungsweise auseinander angeordnet sind, als üblicherweise Kleidungsstücke 24 breit sind. Die Kleidungsstücke 24 werden auch vorliegenden Fall durch die Ablagequerelemente 52 gehalten. Gleichwohl ist es - wie bereits erläutert - auch denkbar, dass die jeweiligen Ablagebänder 28 und 30 beziehungsweise 32 und 34 in einem schmaleren jeweiligen Abstand angeordnet sind, sodass die Kleidungsstücke 24 durch die Ablagebänder 28, 30 beziehungsweise 32, 34 unmittelbar gehalten sind.

Wie bereits erläutert, kann anstelle der Ablagebänder 28, 30 beziehungsweise 32, 34 auch jeweils eine breitere Ablagebahn oder dergleichen Ablageelement verwendet werden. Insgesamt ist somit erkennbar, dass die Kleidungsstücke 24 in einem oberen Bereich des Stauraums 10 unterseitig der Innenseite 20 des Bereichs 16 der Stauraumklappe 12 beziehungsweise unterhalb der Oberseite 44 des Stauraums 10 (im Bereich unterhalb einer Hutablage) in ihrer Ablageposition angeordnet sind. Der beschriebenen Garderobe können somit die Kleidungsstücke 24 oberhalb eines Bodens des Stauraums 10 untergebracht werden, wodurch die Kleidungsstücke 12 vom anderen Gepäck isoliert werden können, sauber geschont und knitterfrei bleiben können und zudem ein einfaches Eingeben und Entnehmen der Kleidung möglich ist. Außerdem ist somit eine effiziente Raumnutzung des Kofferraums beziehungsweise Stauraums 10 gegeben.

Die vorliegende Garderobe ist nicht ausschließlich auf Fahrzeuge mit Stufenheck begrenzt. Bei Kombinationskraftwagen, Coupé-Fahrzeugen oder Cabriolets ist eine derartige Garderobe denkbar.

## Patentansprüche

1. Personenkraftwagen mit einem Stauraum (10) und einer Garderobe für den Stauraum (10), mit einer Stauraumklappe (12), an deren Innenseite (20) ein Aufhängungsmittel (22) angeordnet ist, an welchem bei geöffneter Stauraumklappe (12) wenigstens ein Kleidungsstück (24) in einer hängenden Position aufhängbar ist, und mit einer wenigstens ein, an zumindest einem Ende (36) an der Innenseite (20) der Stauraumklappe (12) befestigtes, biegeweiches Ablageelement (28, 30) aufweisenden Ablageeinrichtung (27), mittels welcher das wenigstens eine Kleidungsstück (24) in einer Ablageposition anordenbar ist, wobei mittels der Ablageeinrichtung (27) das wenigstens eine Kleidungsstück (24) beim Schließen der Stauraumklappe (12) aus der hängenden Position in eine Ablageposition unterseitig der Innenseite (20) der Stauraumklappe (12) und/oder einer Oberseite (44) des Stauraums (10) verlagerbar ist, **gekennzeichnet dadurch, dass** hierzu das wenigstens ein biegeweiches Ablageelement (28, 30) mit seinem anderen Ende an eine Einzugseinrichtung (40) gekoppelt ist, mittels welcher das Ablageelement (28, 30) einziehbar und so in seiner Relativlänge zur Stauraumklappe (12) verkürzbar ist.

2. Personenkraftwagen nach Anspruch 1,
**dadurch gekennzeichnet, dass** als biegeweiche Ablageelemente jeweilige Ablagebänder (28, 30) oder dergleichen vorgesehen sind, welche mit ihrem einen Ende (36) an der Innenseite (20) der Stauraumklappe (12) befestigt und mit ihrem anderen Ende mittels der Einzugseinrichtung (40) in ihrer Relativlänge zur Stauraumklappe (12) veränderbar sind.

3. Personenkraftwagen nach Anspruch 2,
**dadurch gekennzeichnet, dass**
auf der dem wenigstens einen biegeweichen Ablageelement (28, 30) gegenüberliegenden Seite des wenigstens einen Kleidungsstücks (24) wenigstens ein weiteres biegeweiches Ablageelement oder jeweilige Ablagebänder (32,34) vorgesehen ist/sind, welche/s mit seinem/ihrem einen Ende (38) an der Innenseite (20) der Stauraumklappe (12) und mit seinem/ihrem anderen Ende mittels der jeweiligen Einzugseinrichtung (40) in seiner/ihrer Relativlänge zur Stauraumklappe (12) veränderbar ist/sind, wobei das Kleidungsstück (24) in seiner Ablageposition zwischen den beidseitigen biegeweichen Ablageelementen beziehungsweise Ablagebändern (28, 30, 32,34) angeordnet ist.

4. Personenkraftwagen nach einem der Ansprüche 2 und 3,
**dadurch gekennzeichnet, dass**
sich zwischen den Ablagebändern (28, 30, 32,34) jeweilige Ablagequerelemente (52) erstrecken.

5. Personenkraftwagen nach Anspruch 4,
**dadurch gekennzeichnet, dass**
die Ablagequerelemente (52) biegeweich ausgebildet sind.

6. Personenkraftwagen nach einem der vorhergehenden Ansprüche,
**dadurch gekennzeichnet, dass**
die Ablageeinrichtung (27) wenigstens ein Umlenkelement (46) für das zugeordnete biegeweiche Ablageelement oder jeweilige Ablagebänder (32,34) aufweist.

7. Personenkraftwagen nach Anspruch ,
**dadurch gekennzeichnet, dass**
an dem Umlenkelement (46) wenigstens ein Lenkerelement (50) vorgesehen ist, mittels welchem die biegeweichen Ablageelemente oder Ablagebänder (32,34) in der Ablageposition voneinander beabstandet gehalten sind.

## Claims

1. Passenger car comprising a stowage space (10) and a wardrobe for the stowage space (10), the wardrobe having a stowage space flap (12), on the inside (20) of which a suspension means (22) is arranged, on which at least one item of clothing (24) can be suspended in a hanging position when the stowage space flap (12) is open, and the wardrobe having a storage device (27) comprising at least one flexible storage element (28, 30) fastened at at least one end (36) to the inside (20) of the stowage space flap (12), by means of which storage device the at least one item of clothing (24) can be arranged in a storage position,
it being possible, by means of the storage device (27), for the at least one item of clothing (24) to be moved from the hanging position into a storage position under the inside (20) of the stowage flap (12) and/or an upper side (44) of the stowage space (10) when the stowage space flap (12) is closed,
**characterized in that,** for this purpose, at least one flexible storage element (28, 30) is coupled by its other end to a retraction device (40), by means of which the storage element (28, 30) can be retracted and thus shortened in its relative length with respect to the stowage space flap (12).

2. Passenger car according to claim 1,
**characterized in that** corresponding storage belts (28, 30) or the like are provided as flexible storage elements, which are fastened by one end (36) to the inside (20) of the stowage space flap (12) and of which the relative length with respect to the stowage space flap (12) can be changed by the other end by means of the retraction device (40).

3. Passenger car according to claim 2,
**characterized in that,**
on the side of the at least one item of clothing (24) opposite the at least one flexible storage element (28, 30), at least one further flexible storage element or corresponding storage belts (32, 34) is/are provided, of which the relative length with respect to the stowage space flap (12) can be changed by one end (38) thereof on the inside (20) of the stowage space flap (12) and by the other end thereof by means of the corresponding retraction device (40), the item of clothing (24) being arranged in its storage position between the flexible storage elements or storage belts (28, 30, 32, 34) on both sides.

4. Passenger car according to either of claims 2 and 3,
**characterized in that**
corresponding transverse storage elements (52) extend between the storage belts (28, 30, 32, 34).

5. Passenger car according to claim 4,
**characterized in that**
the transverse storage elements (52) are flexible.

6. Passenger car according to any of the preceding claims,
**characterized in that**
the storage device (27) comprises at least one deflection element (46) for the associated flexible storage element or respective storage belts (32, 34).

7. Passenger car according to claim,
**characterized in that**
at least one link element (50) is provided on the deflection element (46), by means of which link element the flexible storage elements or storage belts (32, 34) are held spaced apart from one another in the storage position.

## Revendications

1. Voiture de transport de passagers comportant un espace de rangement (10) et une garde-robe pour l'espace de rangement (10), comportant un rabat (12) d'espace de rangement, sur le côté interne (20) duquel est agencé un moyen de suspension (22), sur lequel au moins un vêtement (24) peut être suspendu dans une position suspendue lorsque le rabat d'espace de rangement (12) est ouvert, et comportant un dispositif de rangement (27) présentant au moins un élément de rangement (28, 30) flexible, fixé à au moins une extrémité (36) sur le côté interne (20) du rabat d'espace de rangement (12), au moyen duquel dispositif de rangement l'au moins un vêtement (24) peut être agencé dans une position de rangement,
dans laquelle
par le biais du dispositif de rangement (27), l'au moins un vêtement (24) peut être déplacé, lors de la fermeture du rabat d'espace de rangement (12), de la position suspendue dans une position de rangement sous le côté interne (20) du rabat d'espace de rangement (12) et/ou un côté supérieur (44) de l'espace de rangement (10), **caractérisée en ce qu'**à cet effet, l'au moins un élément de rangement (28, 30) flexible est accouplé par son autre extrémité à un dispositif d'introduction (40) par le biais duquel l'élément de rangement (28, 30) peut être rétracté et ainsi être raccourci dans sa longueur relative par rapport au rabat d'espace de rangement (12).

2. Voiture de transport de passagers selon la revendication 1,
**caractérisée en ce qu'**il est prévu comme éléments de rangement flexibles des bandes de rangement (28, 30) respectives ou similaires, qui sont fixées par l'une de leurs extrémités (36) sur le côté interne (20) du rabat d'espace de rangement (12) et dont la longueur relative par rapport au rabat d'espace de rangement (12) peut être modifiée par leur autre extrémité par le biais du dispositif d'introduction (40).

3. Voiture de transport de passagers selon la revendication 2,
**caractérisée en ce que**
sur le côté de l'au moins un vêtement (24) opposé à l'au moins un élément de rangement (28, 30) flexible, il est prévu au moins un autre élément de rangement flexible ou des bandes de rangement (32, 34) respectives, dont la/les longueur(s) relative(s) par rapport au rabat d'espace de rangement (12) peut/peuvent être modifiée(s) par l'une de ses/leurs extrémité(s) (38) sur le côté interne (20) du rabat d'espace de rangement (12) et par son/leur autre extrémité par le biais du dispositif d'introduction (40) respectif, dans laquelle le vêtement (24) est agencé dans sa position de rangement entre les éléments de rangement ou les bandes de rangement (28, 30, 32, 34) flexibles des deux côtés.

4. Voiture de transport de passagers selon l'une des revendications 2 et 3,
**caractérisée en ce que**
des éléments transversaux de rangement (52) respectifs s'étendent entre les bandes de rangement (28, 30, 32, 34).

5. Voiture de transport de passagers selon la revendication 4,
**caractérisée en ce que**
les éléments transversaux de rangement (52) sont réalisés flexibles.

6. Voiture de transport de passagers selon l'une des revendications précédentes,
**caractérisée en ce que**
le dispositif de rangement (27) présente au moins un élément de renvoi (46) pour l'élément de rangement flexible associé ou les bandes de rangement (32, 34) respectives.

7. Voiture de transport de passagers selon la revendication,
**caractérisée en ce que**
au moins un élément de guidage (50) est prévu sur l'élément de renvoi (46), par le biais duquel les éléments de rangement ou bandes de rangement (32, 34) flexibles sont maintenus à distance les uns des autres dans la position de rangement.
